Europäisches Patentamt

European Patent Office

Office européen des brevets

(11) Publication number: **0 206 679**
**B1**

(12) **EUROPEAN PATENT SPECIFICATION**

(45) Date of publication of patent specification: **17.10.90**

(21) Application number: **86304547.2**

(22) Date of filing: **13.06.86**

(51) Int. Cl.⁵: **B 60 C 15/06**

(54) Reinforced bead structure for heavy duty tyre.

(30) Priority: **13.06.85 JP 129301/85**

(43) Date of publication of application:
**30.12.86 Bulletin 86/52**

(45) Publication of the grant of the patent:
**17.10.90 Bulletin 90/42**

(84) Designated Contracting States:
**DE FR GB**

(56) References cited:
**EP-A-0 202 925**
**DE-A-2 611 482**
**DE-A-2 727 875**
**DE-A-3 617 880**
**GB-A-2 000 732**

**PATENT ABSTRACTS OF JAPAN, vol. 9, no. 191 (M-402)1914r, 7th August 1985; & JP-A-60 56 608 (SUMITOMO GOMU KOGYO K.K.) 02-04-1985**

(73) Proprietor: **SUMITOMO RUBBER INDUSTRIES LIMITED**
**No. 1-1, Tsutsui-cho 1-chome**
**Chuo-ku Kobe-shi Hyogo 651 (JP)**

(72) Inventor: **Kawamura, Kazuhiko Hounen-nishi syataku Rm. No. 13**
**12, Aza Hounen Shirakawa-shi**
**Fukishima-ken (JP)**
Inventor: **Sato, Kazuo**
**3-9 Uzugamoridai 3-chome**
**Higashinada-ku Kobe-shi Hyogo-ken (JP)**

(74) Representative: **Stewart, Charles Geoffrey**
**SP TYRES UK LIMITED Tyre Technical Division**
**Fort Dunlop Erdington Birmingham B24 9QT (GB)**

(56) References cited:

**PATENT ABSTRACTS OF JAPAN, vol. 9, no. 198 (M-404)1921r, 15th August 1985; & JP-A-60 61 316 (SUMITOMO GOMU KOGYO K.K.) 09-04-1985**

## Description

The present invention relates to a heavy duty pneumatic radial tyre having a carcass ply composed of metallic cords and more particularly to an improvement of the reinforcing structure for the bead portions of such tyres.

In pneumatic radial tyres having a carcass ply composed of metallic cords or so-called semi-radial tyres having a carcass ply composed of cords arranged at an angle of 15° to 30° with respect to the radial direction, the stiffness of its carcass construction is soft in comparison with that of a bias or cross-ply tyre. This contributes to the improvement in ride comfort of the radial tyre. However, the amount of deformation of the tyre during tyre rotation when under load is larger than that of the bias ply tyre and, as a result, structural damage is more common in the bead region.

Previously in order to solve the above mentioned problem, characteristic of radial tyres, many kinds of reinforced constructions of bead regions have been proposed.

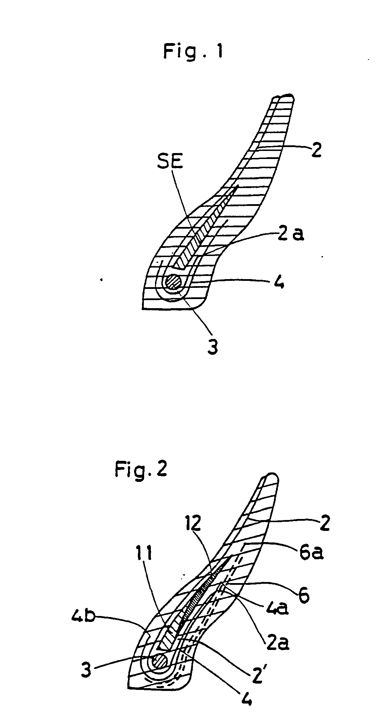

One typical excellent and so far acceptable reinforced construction of bead region is, for example, that shown in Fig. 2, and is characterised by a carass ply 2 composed of radially disposed metallic cords which is turned up around a pair of bead cores 3 from the inside toward the outside. A metallic cord reinforcing layer 4 composed of at least one layer of metallic cords arranged crosswise to the carcass ply cords, is disposed on the outside of the turned-up portions 2 of the carcass ply 2 and a reinforcing layer 6 composed of at least two layers of rubberized organic fibre cords, is arranged on the axially outside of the metallic cord reinforcing layer 4. The organic fibre cords of the reinforcing layer 6 are crosswise to the next layer and crosswise to the metallic cords of the metallic cord reinforcing layer 4. Finally the bead includes a dual apex rubber composed of a stiffener 11 and buffer 12 both of which are disposed above the bead core 3 between the main portion and turned-up portion 2' of the carcass ply 2.

The tyre constructed as above has been favourably accepted by users as a tyre which has largely improved the reinforced construction of bead portions, and which can be used under severe and heavy load conditions. On the other hand, recently, the speed of radial tyres have further increased together with use under heavy load and high internal air pressure, as a result of the remarkable improvements of highways.

Furthermore, journey distances have also been considerably increased with the development of new highways, and some drivers have begun to use tyres under more severe conditions such as higher speeds and longer distance running under heavy load and high internal air-pressure. Thus bead separation failure is sometimes induced.

On the other hand, it is regarded as a sales point for steel radial tyres to endure recapping of the worn tyre two or three times in order to substantially reduce the running costs. Thus it is highly desirable to provide a highly durable reinforced bead construction, which is vital to preserving the tyre carcass life.

As described above, the radial or semi-radial tyre has a carcass ply composed of substantially radially directed cords, as a result, the sidewall of the tyre is soft and the amount of deformation of the tyre during rotation when loaded is larger than that of a bias ply tyre.

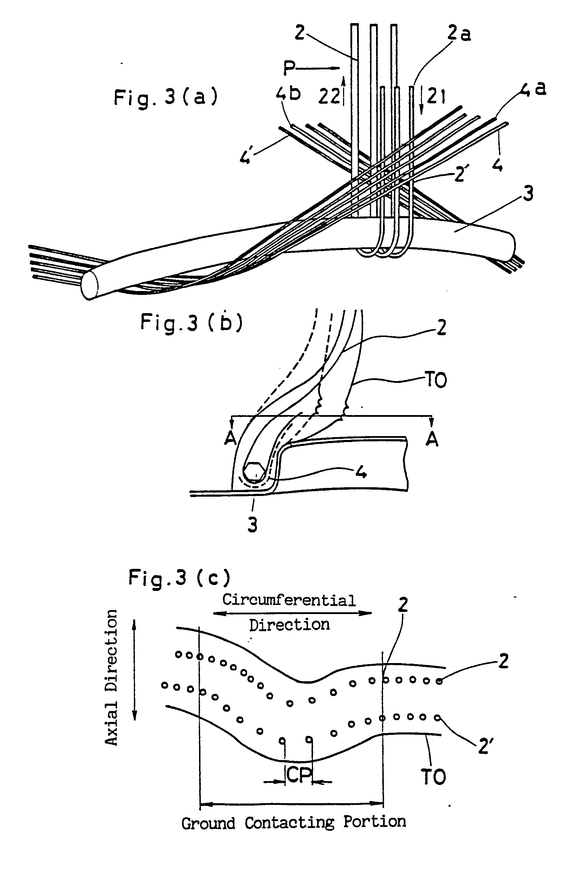

Considering the bead portions of radial tyres as a composite construction of rubber and fibres, and taking the movement of the carcassply in the bead portion under loaded running into consideration, when the tyre is inflated to a high internal pressure P as shown in Fig. 3(a), the carcass ply 2 is moved upwardly as shown by an arrow 22, and the turned up portion 2' of the carcass ply 2 is moved downwardly as shown by an arrow 21. In the extreme, the carcass ply 2 may be pulled out from the bead core 3 which is the so-called "ply blowout" phenomenon. The metallic cord reinforcing layer 4 acts to prevent the carcass ply 2 from this "ply blowout" because it is disposed at an angle of 50° to 70° with respect to the carcass ply cords.

Furthermore when the tyre is loaded, the shape of the bead portion in the ground contacting portion of the sidewall changes from the dotted line to the solid line in Fig. 3(b), and the outside (TO) of the sidewall over the rim flange is subjected to deformation towards the axial outside of the tyre. As a result, the cord spacing (CP) in the turned up portion is widened as shown in Fig. 3(c). Similarly an increase in cord spacing occurs in the main portion of the carcass ply 2, too.

The more severe the cord space increasing phenomenon, the more the stress concentration the rubber at the radially outer end of the turned up portion 2' of the carcass ply 2, accordingly, the peeling phenomenon occurs earlier and grows to result in bead separation failure.

In the reinforcing structure for beads disclosed previously (Japanese Patent publication No. 52—11481), in order to alleviate the stress concentration at the metal cord ends, a reinforcing layer composed of at least two layers of organic fibre cords, such as nylon or aramid fibre cords, laid at an angle of 60° to 80° with respect to the carcass ply cords, is disposed at the axial outside of the metallic cord reinforcing layer. However, there is no means to prevent the main portion of the carcass ply from the above mentioned increased cord space phenomenon, so the reinforcing in the bead portion is still insufficient.

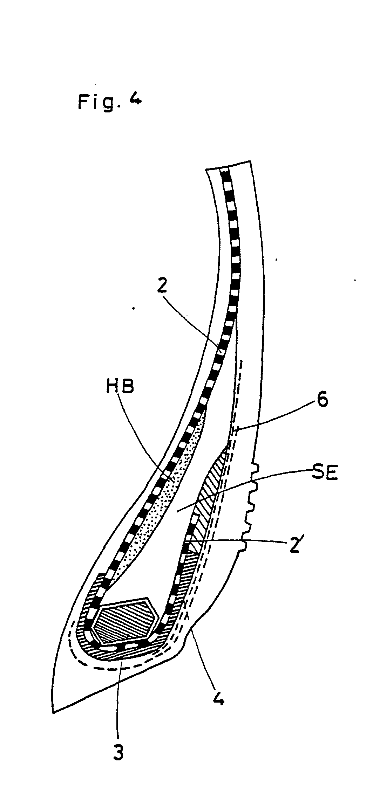

As a prior technique aimed at prevention of the increased cord space phenomenon, as shown in Fig. 4, it has been proposed to provide a hard rubber strip (HB) between the main portion of the carcass ply 2 and the triangular bead apex rubber (SE) in contact with the main portion of the carcass ply 2.

This means however is still unsufficient in terms of increasing the circumferential stiffness of the carcass ply 2.

Another consideration is that the load on a pneumatic tyre is borne mainly by the internal air pressure and partly by the bead portion. Accordingly, the bad effect of loaded running occurs mostly in the bead portion. Thus in order to restrain deformation of the bead portion, there has been mainly employed a reinforcing structure in which a very large number of plies are arranged axially outside the turned up portion of the carcass ply. This, however, increases the volume of the bead portion, consequently, the heat generation in the bead portion is also increased. Therefore, the bead portion tends to suffer from damage. Further, the prior art techniques are insufficient especially in restraining the increasing cord space phenomenon in the main portion of the carcass ply, so the stress concentration occurs on the cord ends whose stiffness is larger, and peeling damage between rubber and the cord ends is apt to be induced. Accordingly the durability of the tyre decreases.

A tyre according to the preamble of claim 1 is known, e.g. from DE—A—2727875 (Fig. 4f).

An object of the present invention, therefore, is to provide a reinforcing structure for the bead portions of radial tyres for heavcy loads which can eliminate these difficult problems which have been encountered with the prior art techniques, namely, durability under increasing and severe service conditions and repeated carcass life with retreading two or three times.

The present invention achieves these objects by providing a radial tyre of the kind set forth with an inside reinforcing layer of rubberised cord fabric which extends along and adjacent to the axially inner side of the carcass ply, the height of the radially outer edge of the inside reinforcing layer being 0.5 to 3.0 times the height of the turned up edge and in addition being greater than the height of the radially outer edge of the metal reinforcing layer and the radially inner edge of the reinforcing layer is interposed between the main portion of the carcass ply and the inner turned up portion of the metal reinforcing layer.

Preferably in addition the height of the radially outer end of the turned up portion on the inside of the bead is 0.3 to 0.8 times the height of the outer edge of the turned up portion of the carcass ply.

The cords of the inside reinforcing layer may have an initial modulus of elasticity of 700 to 15000 kgf/mm2. These cords are preferably also laid to cross the carcass cords at angles of 30° to 80°.

The bead region may have a dual component apex one component being hard one being soft but alternatively a soft rubber apex may be used with the reinforcing bead of the invention.

Further aspects of the invention will be apparent from the following description, by way of example only of an example in conjunction with the drawings in which:—

Fig. 1 is a cross-sectional view showing the bead portion of a known radial tyre having a common bead construction;

Fig. 2 is a cross-sectional view showing a reinforced bead structure of the prior art tyre;

Fig. 3(a) is a schematic view showing the dislocating direction of the cords in the bead region when the tyre is inflated;

Fig. 3(b) is a schematic showing the deformation of the bead portion over the rim flange in the ground contacting portion of the tyre when under load;

Fig. 3(c) is a schematic view showing the increasing cord space phenomenon at the position A—A in Fig. 3(b);

Fig. 4 is a cross-sectional view showing one reinforced bead portion according to the prior art;

Fig. 5 is a cross-sectional view showing a reinforcing structure for the bead region of a radial tyre according to the present invention; and

Fig. 6 is a diagrammatic view showing the durability test results by a steel drum tester.

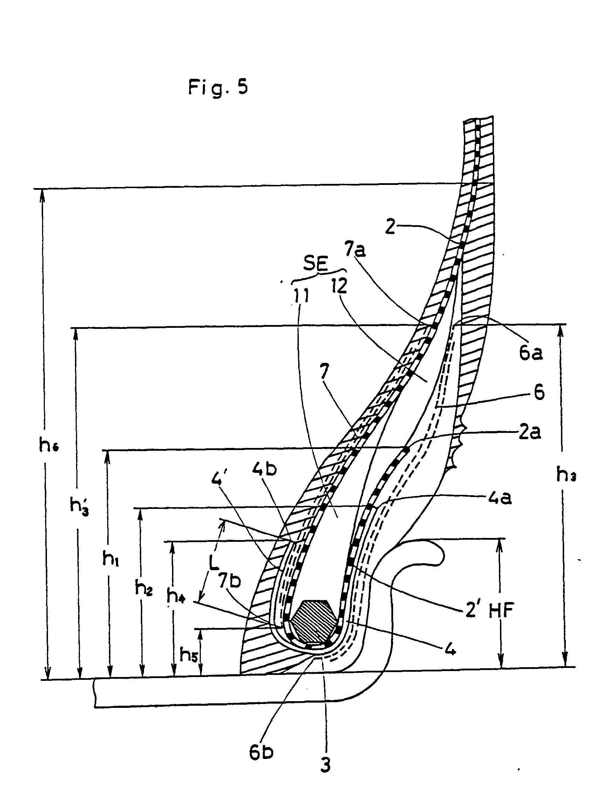

As shown in Fig. 5 the reinforcement structure for the bead portion of a radial tyre for heavy load, comprises a carcass ply 2 of a radial or a semi-radial arrangement, composed of at least one layer of metal cords at an angle of 90° to 60° with respect to the tyre equatorial line both ends of which are turned up one end around one of a pair of annular bead cores 3. A metallic cord reinforcing layer (4) composed of rubberised metallic cords arranged along and adjacent to the axially outer side of the turned up portion 2' of the carcass ply 2, and turned up around the bead core 3 toward the axially inside of the tyre. The height $h_2$ of the radially outer end 4a of the metallic cord reinforcing layer 4 is 0.5 to 0.9 times as large as the height $h_1$ of the radially outer end 2a of the turned up portion 2' of the carcass ply 2, (i.e. $0.5H_1 > h_2 > 0.9h_1$). The height $h_4$ of the radially outer end 4b of the turned up portion 4' of the metallic reinforcing layer 4 is also smaller than the height $h_2$ of the radially outer end 4a of the metallic cord reinforcing layer 4, (i.e. $h_4 < h_2$).

An outside reinforcing layer 6 composed of rubberised organic cords is provided which extends along and adjacent to the axially outside of the metallic cord reinforcing layer 4 from a height $h_3$ which is 1.3 to 3.0 times as large as the height $h_1$ of the radially outer end 2a of the turned up portion 2' of the carcass ply 2. The reinforcing layer 6 covers both outer ends (4a and 2a) of the metallic cord reinforcing layer 4 and of the turned up portion 2' of the carcass ply 2, ($1.3h_1 < h_3 < 3.0h_1$).

An inside reinforcing layer 7 composed of fibre cords, is disposed along the axially inside of the main portion of the carcass ply 2. The height $h_3'$ of the radially outer end 7a of the inside reinforcing layer 7 is 0.5 to 3.0 times as large as the height $h_1$, and is greater than the height $h_4$, (i.e. $h_3' > h_4$) and ($0.5h_1 < h_3' < 3.0h_1$). The radially inner portion of the inside reinforcing layer 7 is interposed between the main portion of the carcass ply 2 and the turned up portion 4' of the metallic cord reinforcing layer 4.

It is preferable that the height of the radially outer end 2a of the turned up portion 2' of the carcass ply 2 is 0.3 to 0.5 times as large as the height $h_6$ at which the section width of the tyre is a maximum when the tyre is inflated to the specified air pressure.

In this invention, the term "height" is defined as the perpendicular distance in the radial direction from the bead base to the point concerned.

When the height h1 is less than 0.3 h6, the rigidity of the bead portion becomes less, and the resistance of the bead portion to wear due to the friction with the rim also becomes less. Furthermore, there is a risk of the carcass ply 2 slipping out from the bead core 3 if the turned up portion 2' is too short and the bonding area with other components may also be insufficient.

On the other hand, when the height h1 is more than 0.5 h6, the outer end 2a extends up to near the radially inner position in the sidewall at which the flexure is most severe and the difference of rigidity becomes large. Therefore, it provides a nucleus for a crack, and the outer end 2a is strongly subjected to separation failure as a result.

Accordingly, in this invention, the height h1 of the outer end 2a of the turned up portion 2' is 0.3 to 0.5 times the height h6.

The value of this choice of construction of the invention is confirmed by measuring the resistance to the "ply blowout" phenomenon and the "strain in the cord ends".

At the same time, it is preferable that the height h2 of the radially outer end 4a of the reinforcing layer 4 is 0.7 to 0.9 times the height h1 of the outer end 2a of the turned up portion 28 of the carcass ply 2.

By contrast with the invention conventional tyre as shown in Fig. 2, has the radially outer end 4a of the metallic cord reinforcing layer 4 higher than the outer end 2a of the turned up portion 2 of the carcass ply 2 which results in frequent bead failures in the region where the outer end 4a is located.

The inventors studied this cause of the bead failure at the above mentioned position, and confirmed by many experiments that the outer end 4a of the reinforcing layer 4 functions as a resistant layer having a higher bending resistance than the portion of the tyre from the sidewall to the bead portion and resisting the deflection which is repeated every tyre revolution in the above mentioned portion. As a result, the rubber at the outer end 4a is broken down, which causes cord separation from the rubber and furthermore, the higher the position of the outer end 4a of the reinforcing layer 4, the earlier the cord separation occurs.

The inventors discovered that the cord separation failure in the bead portion is greatly decreased by making the height h2 of the outer end 4a lower than the height h1 of the outer end 2a, as shown in Fig. 5, and the height h2 is 0.7 to 0.9 times as large as the height h1.

When the height h2 is smaller than 0.7 h1, the rigidity of the bead section also lowers, and the resistance of the bead section to wear due to friction with the rim and the resistance to case failure under severe load also lowers.

On the contrary, when the height h2 is in the range of 0.9 h1 to 1.0 h1, the outer end 4a of the reinforcing layer 4 overlaps with the outer end 2a of the turned up portion 2', as a result, the stress concentration is doubled thereon, and problems are generated earlier than ever.

Therefore, the range of the height h2 of the outer end 4a of the reinforcing layer 4 is chosen as 0.7 to 0.9 times as large as the height h1 of the outer end 2a of the turned up portion 2' of the carcass ply 2.

The metallic cord reinforcing layer 4 is arranged along the axially outside of the turned up portion 2' of the carcass ply 2 from the height h2, and turned up around the bead core 3 from the axially outside toward the axially inside of the tyre to form the turned up portion 4', and the radially outer end 4b of the turned up portion 4' of the reinforcing layer 4 is terminated at the height h4 (i.e. h4<h2).

The inside reinforcing layer 7 extends from the height h3' along the axially inside of the main portion of the carcass ply 2, and its radially inner end 7b is terminated at the axially inside of the bead core 3 at a height h5. The inner end 7b is interposed between the main portion of the carcass ply 2 and the turned up portion 4' of the reinforcing layer 4.

At the above mentioned height h4, the ply cords of the inside reinforcing layer 7 are laid to cross the ply cords of the main portion of the carcass ply 2 at an angle of 30° to 80°, more preferably 40° to 75°.

The inside reinforcing layer 7 is composed of at least two rubberized ply layers each containing fibre cords embedded therein.

The height h3' of the outer end 7a is in the range of 0.5 to 3.0 times the height h1 of the outer end 2a of the turned up portion 2' of the carcass ply 2.

The higher the height h3', the more preferable it is from the stand point to prevent the outer end 2a of the turned up portion 2 from the stress concentration and the carcass strength. However, when the height h3' is over 3.0 h1, such effect as described above become constant, and judging from such point of view as weight and cost reduction of tyre, the maximum value of the height h3' was set as 3.0 h1.

On the contrary, if h3' is under 0,5 h1, which leads to good weight and cost reduction of the tyre, the important and necessary effect of preventing the stress concentration is suddenly reduced, so the lower limit of the height h3' is 0.5 h1.

The inside reinforcing layer 7 has another important function which is to protect the outer end 4b of the turned up portion 4' of the reinforcing layer 4 from stress concentration and to effectively prevent the boundary area between the turned up portion 4' and the main portion of the carcass ply 2 from separation. Thus it is important for the inner end 7b to terminate on the inside of the bead core 3 at a height h5, and to be interposed by a given width L between the turned up portion 4' of the reinforcing layer 4 and the main portion of the carcass ply 2.

Furthermore, there is a more important factor, which is the cord angles of the inside reinforcing layer 7. If the angle of cords arrangement between the metal cord reinforcing layer 4 and the turned up portion 2' of the carcass ply 2 is in the range of 40° to 80° at the right side upwards (viewing from the outside of the axial direction of the tyre) at the position where the height is about h2, the cord angle of the turned up portion 4' thereof incline at the left side upwards angle of 40° to 80°.

Thus, in order to let the inside reinforcing layer 7 effectively provide all the above mentioned functions, it is important that the ply cords of the inside reinforcing layer 7 are disposed adjacent to the metal cord reinforcing layer 4, and cross the carcass ply cords at an angle of 30° to 80°, in the right side upwards, more preferably 40° to 75°; and the inside reinforcing layer 7 composed of at least two layers of plies each comprising parallel cords and the ply cords are crosswise to the adjacent ply.

Therefore, the carcass ply 2 and the inside reinforcing layer 7 make a triangle structure by intereaction of their respective cords, and, further, by adopting fibre cords having a relatively high modulus of initial elasticity of 700 to 15000 $kgf/mm^2$, more preferably 3000 to 15000 $kgf/mm^2$, for ply cords of the inside reinforcing layer 7, the durability of the bead portion is greatly improved. This was confirmed through various fleet tests.

In addition, the height h4 of the turned up portion 4' of the metal cord reinforcing layer 4 is in the range of 0.2 to 0.8 times as large as the height h3' of the outer end 7a of the inside reinforcing layer 7, in order to disperse the strain by keeping the overlap zone with the inside reinforcing layer 7 of suitable width L.

When the height h4 is smaller than 0.2 h3, the width L of the overlap zone becomes narrow, and dispersion of the strain and the lateral stiffness become unsatisfactory, on the other hand, when the height h4 is larger than 0.8 h3, the outer end 7a of the inside reinforcing layer 7 is located near the outer end 4b of the turned up portion 4' of the metal cord reinforcing layer 4, and this is not preferable.

The height h5 of the inner end 7b of the inside reinforcing layer 7 is set under 40 mm, more preferably under 30 mm from the bead base, this area is around the inside of the bead cord 3, and the position where the dynamic strain is small and the movement is most stable and the stress concentration on the cut ends of cords is very small.

Further, in order to reinforce the outside of the radially outer ends (2a and 4a) of the metal cords of the carcass ply 2 and the reinforcing layer 4, the outside reinforcing layer 6 composed of at least two ply layers each containing organic cords, is arranged along the axially outside of the turned up portion 2' and the reinforcing layer 4 from the height h3 to the bead base portion. The height h3 is in a range of 1.3 to 3.0 times the height h1 of the outer end 2a of the turned up portion 2' of the carcass ply 2.

The annular rubber apex (SE), which in cross section is extending radially outwardly from the bead core 3, gradually decreases in thickness to provide a substantially triangular cross sectional shape. The apex (SE) is disposed above the bead core 3 and between the main portion of the carcass ply 2 and the turned up portion 2' thereof.

The apex (SE) is composed of two rubber components.

The first is a so-called stiffener 11 is placed adjacent to the bead core 3, and disposed between the carcass ply main portion 2 and turned up portion 2', and composed of high elasticity rubber compound having a high modulus of elasticity of 60 to 150 kgf/cm° at 100% elongation and a JIS (A) hardness of 70° to 90°. The second is a so-called buffer 12 which is disposed adjacent to the stiffener 11 and the turned up portion 2' of the carcass ply 2. It comprises low elasticity rubber compound having a low modulus of elasticity of 10 to 45 $kgf/cm^2$ at 100% elongation and JIS (A) hardness of 45° to 65° which is lower than those of the carcass ply coating rubber and the stiffener 11.

Alternatively, the rubber apex (SE) can be composed of a single component of soft rubber compound having a modulus of elasticity of 10 to 45 $kgf/cm^2$ at 100% elongation and a JIS (A) hardness of 45° to 65°. In this case, the following advantage in the improvement of durability of the bead portion is added.

According to the invention, the axially inner side of the main portion of the carcass ply 2 is reinforced by the inside reinforcing layer 7 and the metal cord reinforcing layer 4, and the deformation of the bead portion is thus greatly reduced.

Accordingly, there is no need to adopt for the apex the hard rubber compound of the prior art, which is apt to induce a high internal temperature rise. Thus, it becomes possible for the triangular apex to comprise a single rubber component of soft rubber compound which has low heat generation properties and which being flexible returns immediately to the original state, absorbing deformation in the radial and circumferential directions effectively. However, it is also practicable to use a hard rubber apex for the reinforcing structure for a bead region of the present invention.

It was, however, confirmed through various invention that, especially in the case of a tubeless tyre having 15° tapered bead seat, the apex composed of a single component of soft rubber compound can be more effectively used for rim matching to provide necessary properties.

As described above, it is an important feature of the present invention to form a triangular structure by arranging the inside reinforcing layer 7, composed of fibre cords having a relatively high modulus of initial elasticity, along the axially inside of the main portion of the carcass ply 2, crossing the carcass ply cords at an angle of 30° to 80°.

Furthermore, it is other important feature of the present invention to form a bead portion having high rigidity by interposing the inner portion of the inside reinforcing layer 7 between the main portion of the carcass ply and the turned up portion 4' of the metallic cord reinforcing layer 4 by a given width L with the cords of respective plies crossing each other.

By adopting the above mentioned structure, the durability of the bead portion is greatly improved because the dispersion of the stress during tyre rotation which is transmitted by the carcass ply 2 through the bead cores 3 to the rim flange, is distributed evenly to a relatively large area, and the cord spaces in carcass ply 2 are restrained in expansion, and heat generation is controlled at a low level.

Then again the coating rubber of the carcass ply 2, of the metal cord reinforcing layer 4, and of the inside and outside reinforcing layers (7 and 6) must have an excellent adhesive force and an excellent resistance to boundary fatigue in the state of both static and dynamic conditions.

In the triangular bead apex, the soft rubber compound, having a low modulus of elasticity of 10 to 45 kgf/cm² at 100% elongation and JIS hardness of 45° to 65°, forms a buffer, whether it is one single rubber compound or a buffer of two components and as a result, the internal heat generation in the bead portion is reduced to a lower level than that in a conventional tyre. Thus, the durability of the bead portion can be considerably improved so as to provide a reliable and high security tyre having the ability to be recapped two or three times.

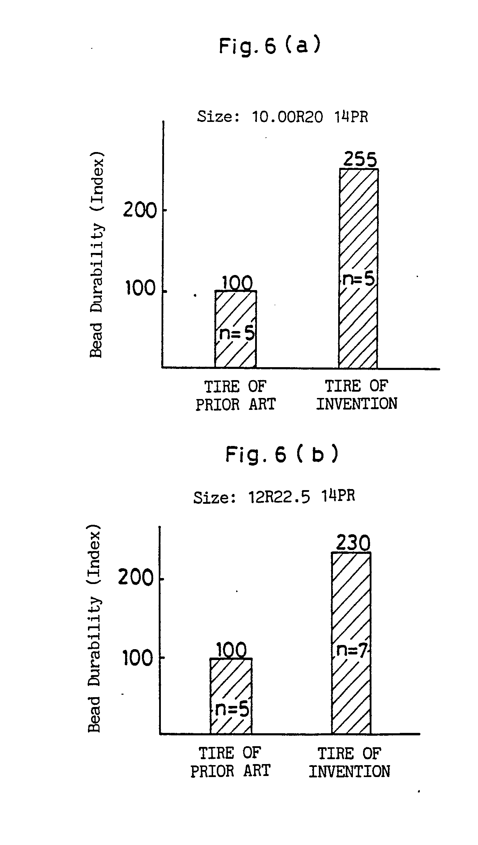

The effectiveness of the invention was tested and will now be described with reference to the comparison test of the tyres shown in Table 1 and Fig. 5, having the above described reinforcing structure with the conventional tyre shown in Table 2 and Fig. 2, (according to Japanese Patent No. 52—11481) having the same construction except for the bead structure. The tests were for tyres of the sizes 10.00R20. 14PR. and 12R 22.5 14PR. In this test, tyres were run on a steel drum under constant work (Q (load × speed) kg.km/h and normal internal pressure, and bead durability (running times until the bead portion was damaged) was measured. The results are shown in Fig. 6 where the performance is indicated by an index based on the assumption that the index of the conventional tyre is 100.

The results of the drum durability test confirms that the tyre according to the present invention has an excellent durability in the bead portion.

In addition fleet testing was carried out under various service conditions and the results of this fleet test showed that the tyre according to the present invention had few of the above mentioned problems, even under severe service conditions, and had an excellent durability in the bead portion.

It was also confirmed by these tests that the tyre of size 12R22.5 according to the present invention was better than the conventional tyre in respect of ease in fitting the tyre to the rim and for rim matching to 15° taper rims.

EP 0 206 679 B1

T a b l e  1

(mm)

| Construction | Sizes | 10.00R20 14PR. with tube | 12R22.5 14PR. 15 taper tubeless |
|---|---|---|---|
| Height (h6) at maximum section width | | 132.4 | 114 |
| Height (h1) of the turned up portion (2') | | 56 | 40 |
| Metallic cord reinforcing layer (4): | | 1 ply | 1 ply |
| Height (h2) of the outer end (4a) | | 44 | 30 |
| Height (h4) of the outer end (4b) | | 52 | 35 |
| Cord angle | | 65° | 65° |
| Cord material | | Steel (4x4) 0.175 | Steel (4x4) 0.175 |
| Cord diameter | | 0.98 mm | 0.98 mm |
| 100% Modulus of coating rubber | | 48 kg/cm$^2$ | 48 kg/cm$^2$ |
| Inside reinforcing layer (7): | | 2 plies | 2 plies |
| Height (h3') of the outer end (7a) | | 98 | 52 |
| Height (h5) of the inner end (7b) | | 32 | 10 |
| Cord angle | | 70° | 70° |
| Cord material (crossed with each ply) | | 1500 d/2 Kevlar 35 ends/5 cm | 1500 d/2 Kevlar 35 end/5 cm |
| 100% modulus of coating rubber | | 48 kg/cm$^2$ | 48 kg/cm$^2$ |
| Outside reinforcing layer (6): | | | |
| Height (h3) of the outer end (6a) | | 82 | 80 |
| Cord angle | | 65° | 65° |
| Cord material | | 1260 d/2 Nylon | 1260 d/2 Nylon |
| 100% modulus of coating rubber | | 30 kg/cm$^2$ | 30 kg/cm$^2$ |
| Apex rubber (SE): | | (dual layers) | (single layer) |
| JIS hardness (A) Buffer (12) | | 58° | 58° |
| Stiffener (11) | | 80° | |

Table 2

(mm)

| Construction | Sizes | 10.00R20 14PR. with tube | 12R22.5 14PR. tubeless tire |
|---|---|---|---|
| Height (h6) at maximum section width | | 137 | 114 |
| Height (h1) of outer end (2a) of turned up portion (2') of carcass ply (2) | | 45 | 30 |
| Metal cord reinforcing layer (4): | | | |
|   Height (h2) of the outer end (4a) | | 57 | 40 |
|   Height (h4) of the outer end (4b) | | 53 | 22 |
|   Cord angle | | 65° | 65° |
|   100% modulus of coating rubber | | 48 kg/cm$^2$ | 48 kg/cm$^2$ |
| Fiber code reinforcing layer (6): | | | |
|   Height of the outer end (6a) | | 82 | 80 |
|   100% modulus of coating rubber | | 30 kg/cm$^2$ | 30 kg/cm$^2$ |
| JIS (A) hardness of stiffener | | 80° | --- |
| JIS (A) hardness of buffer | | 58° | 58° |

EP 0 206 679 B1

**Claims**

1. A radial tyre for heavy duty use comprising a metal cord fabric carcass ply (2) having its cords at angles of 60° to 90° to the tyre equatorial line and the cords being turned up around bead cores (3) to form ply turn up portions (2'), the tyre having in each bead a rubberised metal cord reinforcing layer (4) along and adjacent to the carcass ply (2) and ply turn up portion (2') such that the height (h2) of the radially outer edge (4a) of the metal layer (4) on the outside of the bead is 0.5 to 0.9 times the height (h1) of the turned up portion edge (2a) and the height (h4) of the radially outer edge (4b) of the metal layer (4) on the inside of the bead is less than the height (h2) of the radially outer edge (4a), of the metal layer (4) on the outside of the bead, an outside reinforcing layer (6) of rubberised organic cord fabric extending along and adjacent to the axially outer side of the metal cord reinforcing layer (4) radially inwards from a height (h3) which is 1.3 to 3.0 times the height (h1) of the turned up edge (2a) to overlie and cover both edges (2a and 4a) of the turned up carcass ply (2') and the metal reinforcing layer (4), characterised by an inside reinforcing layer (7) of rubberised fibre cord fabric which extends along and adjacent to the axially inner side of the carcass ply (2), the height (h3') of the radially outer edge (7a) of the inside reinforcing layer (7) being 0.5 to 3.0 times the height (h1) of the turned up edge (2a) and in addition being greater than the height (h4) of the radially outer edge (4a) of the metal reinforcing layer (4) and the radially inner edge (7b) of the inside reinforcing layer (7) is interposed between the main portion of the carcass ply (2) and the inner turned up portion (4') of the metal reinforcement layer (4).

2. A tyre according to claim 1 characterised in that the height (h4) of the radially outer edge (4b) of the inner turned up portion (4') of the metal reinforcing layer (4) on the inside of the bead is 0.3 to 0.8 times the height (h1) of the outer edge (2a) of the turned up portion (2') of the carcass ply (2).

3. A tyre according to claim 1 or 2 characterised by the cords of the inside reinforcing layer (7) comprising cords having an initial modulus of elasticity of 700 to 15000 kgf/mm².

4. A tyre according to claim 1, 2 or 3 characterised by the cords of the inside reinforcing layer (7) being laid across the cords of the carcass ply (2) at an angle of 30° to 80°.

5. A tyre according to claim 1, 2 3, or 4 characterised by a bead apex (SE) comprising rubber material disposed between the main portion (2) and turned up portion (2') of the carcass ply, the apex (SE) extending radially outwardly from the bead core (3), tapering and comprising two components (11, 12) the first (11) of hard rubber with a modulus of elasticity of 60—150 kgf/cm² at 100% elongation and a JIS (A) hardness of 70° or more and the second (12) of soft rubber being adjacent to but axially outward of the first (11) and comprising rubber having a modulus of elasticity of 10 to 45 kgf/cm² at 100% elongation and a JIS (A) hardness of 45° to 65°.

6. A radial tyre according to claim 1, 2, 3 or 4 characterised by a bead apex (SE) comprising rubber material disposed between the main portion (2) and turned up portion (2') of the carcass ply, the apex (SE) extending radially outwardly from the bead base, tapering and comprising soft rubber compound having a modulus of elasticity of 10 to 45 kgf/cm² at 100% elongation and JIS (A) hardness of 45° to 65°.

**Patentansprüche**

1. Radialreifen für Schwerlastgebrauch mit einer Metallkordgewebe-Karkasslage (2), deren Korde mit Winkeln von 60° bis 90° zur Reifenäquatoriallinie liegen, wobei die Korde um Wulstkerne (3) zur Bildung von nach oben geschlagenen Lagenabschnitten (2') nach oben geschlagen sind, der Reifen in jedem Wulst eine gummierte Metallkord-Verstärkungslage (4) längs und benachbart zur Karkasslage (2) und zum nach oben geschlagenen Lagenabschnitt (2') so besitzt, daß die Höhe (h2) der radial äußeren Kante (4a) der Metallage (4) an der Außenseite des Wulstes das 0,5 — bis 0,9-fache der Höhe (h1) des nach oben geschlagenen Kanten-abschnitts (2a) beträgt und die Höhe (h4) der radial äußeren Kante (4b) der Metallage (4) geringer als die Höhe (h2) der radial äußeren Kante (4a) der Metallage (4) an der Innenseite des Wulstes geringer als die Höhe (h2) der radial äußeren Kante (4a) der metallage an der Außenseite des Wulstes ist, eine äußere Verstärkungslage (6) aus gummiertem Gewebe mit organischen Korden sich längs und benachbart zur axial äußeren Seite der Metallkord-Verstärkungslage (4) radial nach innen von einer Höhe (h3) erstreckt, die das 1,3- bis 3,0-fache der Höhe (h1) der nach oben geschlagenen Kante (2a) ist, um beide Kanten (2a und 4a) der nach oben geschlagenen Karkasslage (2') und der Metallverstärkungslage (4) zu überdecken, dadurch gekennzeichnet, daß eine Innenverstärkungslage (7) aus gummiertem Faserkordgewebe vorgesehen ist, die sich längs und benachbart zur axial inneren Seite der Karkasslage (2) erstreckt, wobei die Höhe (h3') der radial äußeren Kante (7a) der inneren Verstärkungslage (7) das 0,5- bis 3,0-fache der Höhe (h1) der nach oben geschlagenen Kante (2a) beträgt und zusätzlich größer als die Höhe (h4) der radial äußeren Kante (4a) der Metallverstärkungslage (4) ist und daß die radial innere Kante (7b) der inneren Verstärkungslage (7) zwischen den Hauptabschnitt der Karkasslage (2) und den inneren nach oben geschlagenen Abschnitt (4') der Metallverstärkungslage (4) eingesetzt ist.

2. Reifen nach Anspruch 1, dadurch gekennzeichnet, daß die Höhe (h4) der radial äußeren Kante (4b) des inneren nach oben geschlagenen Abschnitts (4') der Metallverstärkungslage (4) an der Innenseite des Wulstes das 0,3- bis 0,8-fache der Höhe (h1) der äußeren Kante (2a) des nach oben geschlagenen Abschnitts (2') der Karkasslage (2) ist.

3. Reifen nach Anspruch 1 oder 2, dadurch gekennzeichnet, daß die Korde der inneren Verstärkungslage (7) Korde umfassen mit einem Anfangs-Elastizitätsmodul von 700 bis 15000 kp/mm² (6,865 bis 147,10 kN.mm⁻²).

4. Reifen nach einem der Ansprüche 1, 2 oder 3, dadurch gekennzeichnet, daß die Korde der inneren Verstärkungslage (7) zu den Korden der Karkasslage (2) mit einem Winkel von 30° bis 80° gelegt sind.

5. Reifen nach einem der Ansprüche 1, 2, 3 oder 4, dadurch gekennzeichnet, daß ein Wulstkernreiter (SE) aus Gummimaterial zwischen dem Hauptabschnitt (2) und dem nach oben geschlagenen Abschnitt (2') der Karkasslage angeordnet ist, wobei der Kernreiter (SE) sich radial von dem Wulstkern (3) nach außen erstreckt, sich verjüngt und zwei Komponenten (11, 12) umfaßt, die erste (11) aus Hartgummi mit einem Elastizitätsmodul von 60 bis 150 kp/cm² (0,588 bis 1,471 kN.cm⁻²) bei 100% Längung und einer JIS(A)-Härte von 70° oder mehr und die zweite (12) aus Weichgummi, benachbart zu, jedoch außerhalb der ersten (11) und aus Gummi mit einem Elastizitätsmodul von 10 bis 45 kp/cm² (98,1 bis 441,3 N.cm⁻²) bei 100% Längung und einer JIS(A)-Härte von 45° bis 65°.

6. Radialreifen nach Anspruch 1, 2, 3 oder 4, dadurch gekennzeichnet, daß ein Wulstkernreiter (SE) aus Gummimaterial zwischen dem Hauptabschnitt (2) und dem nach oben geschlagenen Abschnitt (2') der Karkasslage angeordnet ist, wobei der Kernreiter (SE) sich von dem Wulst-Grundabschnitt radial nach außen erstreckt, sich verjüngt und eine Weichgummimasse mit einem Elastizitätsmodul von 10 bis 45 kp/cm² (98,1 bis 441,3 N.cm⁻²) bei 100% Längung und einer JIS(A)-Härte von 45° bis 65° umfaßt.

**Revendications**

1. Pneumatique à carcasse radiale de type renforcé, comprenant une nappe de carcasse (2) formée d'une étoffe de câblés métalliques dont les câblés font des angles compris entre 60 et 90° avec l'équateur du pneumatique, les câblés étant repliés autour de tringles (3) afin qu'ils forment des parties repliées (2') de nappe, le pneumatique ayant, dans chaque talon, une couche (4) de renforcement de câblés métalliques caoutchoutés placée le long de la nappe de carcasse (2) et de la partie repliée (2') et adjacente à cette nappe et à cette partie afin que la hauteur (h2) du bord radialement externe (4a) de la couche métallique (4) à l'extérieur du talon soit comprise entre 0,5 et 0,9 fois la hauteur (h1) du bord (2a) de la partie repliée et que la hauteur (h4) du bord radialement externe (4b) de la couche métallique (4) à l'intérieur du talon soit inférieure à la hauteur (h2) du bord radialement externe (4a) de la couche métallique (4) à l'extérieur du talon, une couche externe de renforcement (6) formée d'une étoffe de câblés organiques caoutchoutés disposée le long de la face axialement externe de la couche (4) de renforcement de câblés métalliques et adjacente à cette couche, radialement à l'intérieur, à partir d'une hauteur (h3) comprise entre 1,3 et 3,0 fois la hauteur (h1) du bord replié (2a) afin qu'elle soit disposée sur les deux bords (2a et 4a) de la partie repliée (2') de nappe de carcasse et de la couche métallique de renforcement (4) et les recouvre, caractérisé par une couche interne de renforcement (7) d'étoffe de câblés de fibres caoutchoutées placée le long de la face axialement interne de la nappe de carcasse (2) et adjacente à cette face axialement interne, la hauteur (h3') du bord radialement externe (7a) de la couche interne de renforcement (7) étant comprise entre 0,5 et 3,0 fois la hauteur (h1) du bord replié (2a) et, en outre, étant supérieure à la hauteur (h4) du bord radialement externe (4a) de la couche métallique de renforcement (4), et le bord radialement interne (7b) de la couche interne de renforcement (7) est disposé entre la partie principale de la nappe de carcasse (2) et la partie interne repliée (4') de la couche métallique de renforcement (4).

2. Pneumatique selon la revendication 1, caractérisé en ce que la hauteur (h4) du bord radialement externe (4b) de la partie repliée interne (4') de la couche métallique de renforcement (4) à l'intérieur du talon est comprise entre 0,3 et 0,8 fois la hauteur (h1) du bord externe (2a) de la partie repliée (2') de la nappe de carcasse (2).

3. Pneumatique selon la revendication 1 ou 2, caractérisé en ce que les câblés de la couche interne de renforcement (7) sont des câblés ayant un module initial d'élasticité compris entre $7.10^9$ et $150.10^9$ Pa (700 et 15 000 kg/mm²).

4. Pneumatique selon la revendication 1, 2 ou 3, caractérisé en ce que les câblés de la couche interne de renforcement (7) sont disposés afin qu'ils recoupent les câblés de la nappe de carcasse (2) avec un angle compris entre 30 et 80°.

5. Pneumatique selon la revendication 1, 2, 3 ou 4, caractérisé par un élément de bourrage de pointe de talon (SE) comprenant un matériau à base de caoutchouc placé entre la partie principale (2) et la partie repliée (2') de la nappe de carcasse, l'élément de pointe (SE) étant disposé radialement vers l'extérieur à partir de la tringle (3) avec une dimension qui diminue et comprenant deux éléments (11, 12) dont le premier (11) est formé de caoutchouc dur ayant un module d'élasticité compris entre $6.10^6$ et $15.10^6$ Pa (60 et 150 kg/cm²) pour un allongement de 100% et une dureté JIS(A) de 70° ou plus, et dont le second (12) est formé d'un caoutchouc tendre adjacent au premier élément (11) mais placé axialement vers l'extérieur de celui-ci et comprenant un caoutchouc ayant un module d'élasticité compris entre $1.10^6$ et $4,5.10^6$ Pa (10 et 45 kg/cm²) pour un allongement de 100% et une dureté JIS(A) de 45 à 65°.

6. Pneumatique à carcasse radiale selon la revendication 1, 2, 3 ou 4, caractérisé par un élément de bourrage de tringle de pointe (SE) comprenant un matériau à base de caoutchouc placé entre la partie principale (2) et la partie repliée (2') de la nappe de carcasse, l'élément de pointe (SE) dépassant radialement vers l'extérieur de la base du talon avec une dimension qui diminue et comprenant une composition de caoutchouc tendre ayant un module d'élasticité compris entre $1.10^6$ et $4,5.10^6$ Pa (10 à 45 kg/cm²) pour un allongement de 100% et une dureté JIS(A) de 45 à 65°.

Fig. 1

SE

2

2a

4

3

Fig. 2

12

2

6a

11

6

4b

4a

3

2a

2'

4

Fig. 3 (a)

P

4b   22   21   2a   4a

4'

2'

4

3

Fig.3 (b)

2

TO

A                                A

4

3

Fig.3 (c)

Circumferential
Direction

2

2

Axial Direction

2'

TO

CP

Ground Contacting Portion

Fig. 4

Fig. 5

## Fig. 6 (a)

Size: 10.00R20 14PR

## Fig. 6 (b)

Size: 12R22.5 14PR